(19) Europäisches Patentamt
European Patent Office
Office européen des brevets

(11) EP 3 459 924 A1

(12) EUROPEAN PATENT APPLICATION

(43) Date of publication:
27.03.2019 Bulletin 2019/13

(51) Int Cl.:
C04B 41/86 (2006.01)     C04B 41/89 (2006.01)
C04B 41/00 (2006.01)     C04B 41/50 (2006.01)
C04B 41/52 (2006.01)

(21) Application number: 18192623.9

(22) Date of filing: 05.09.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 15.09.2017 JP 2017177473

(71) Applicant: LIXIL Corporation
Koto-ku
Tokyo 136-8535 (JP)

(72) Inventors:
• YASUDA, Ryo
Tokyo, 136-8535 (JP)
• KAWAMURA, Yuuki
Tokyo, 136-8535 (JP)

(74) Representative: Rössler, Matthias
Kahlhöfer Rößler Kreuels
Patentanwälte PartG mbB
(Karo IP Professionals)
Postfach 32 01 02
40416 Düsseldorf (DE)

(54) SANITARY WARE

(57) A sanitary ware is provided in which variability in color is suppressed. A sanitary ware 1 includes a base 3, and a glaze layer 5 formed on an outer side than the base 3. In color representation by the Lab color system, an absolute value of a difference (ΔL) between an L value obtained from observation of a part with the glaze layer 5 formed thereon and an L value obtained from observation of a part with the glaze layer 5 substantially unformed thereon is not more than 12, or a color difference (ΔE) between a color in observation of the part with the glaze layer 5 formed thereon and a color in observation of the part with the glaze layer 5 substantially unformed thereon is not more than 14. Even though the thickness of the glaze layer 5 varies so that the color of the base 3 may be shown more or less through the glaze layer 5, there is almost no difference in color seen from the glaze layer 5 side. Thus, variability in color seen from the glaze layer 5 side is effectively suppressed in the sanitary ware 1.

Fig. 1

**Description**

BACKGROUND

1. Technical Field

The present disclosure relates to a sanitary ware.

2. Related Art

In sanitary wares including, for example, toilet bowls and washbowls, a glaze layer is formed on an outermost surface (for example, JP 2001-72460 A). The sanitary ware is rendered less likely to be smeared with blots or stains by the glaze layer. Another purpose of the glaze layer is to color the sanitary ware.

SUMMARY

In the sanitary ware, however, the color of a base may fail to be completely concealed by the color of a glaze used. The glaze layer may be variable in thickness, which may often result in variability in color in the sanitary ware. Conventionally, such variability in color is not a factor to be considered in the production of sanitary wares.

The present invention addresses the issue of the known art, and provides a sanitary ware adapted to suppress variability in color. The inventors of the present invention have found out that variability in color in a sanitary ware can be adequately suppressed by controlling a difference ($\Delta$L) or a color difference ($\Delta$E) within certain numerical ranges. The difference ($\Delta$L) is a difference between an L value obtained from observation of a part with a glaze layer formed thereon and an L value obtained from observation of a part with the glaze layer substantially unformed thereon. The color difference ($\Delta$E) is a difference between a color in observation of the part with the glaze layer formed thereon and a color in observation of the part with the glaze layer substantially unformed thereon. The present invention has been made based on the finding and may be feasible as hereinafter described.

<1> The present invention provides a sanitary ware including a base and a glaze layer formed on an outer side than the base. The sanitary ware is characterized in that, in color representation by Lab color system, an absolute value of a difference ($\Delta$L) between an L value obtained from observation of a part with the glaze layer formed thereon and an L value obtained from observation of a part with the glaze layer substantially unformed thereon is not more than 12, or a color difference ($\Delta$E) between a color in observation of the part with the glaze layer formed thereon and a color in observation of the part with the glaze layer substantially unformed thereon is not more than 14.

<2> The sanitary ware recited in <1> may be further characterized in that the absolute value of the difference ($\Delta$L) is not more than eight, or the color difference ($\Delta$E) is not more than eight.

<3> The sanitary ware recited in <1> or <2> may be further characterized in that the absolute value of the difference ($\Delta$L) is not more than six, or the color difference ($\Delta$E) is not more than six.

<4> The sanitary ware recited in any one of <1> to <3> may be further characterized in that the L value obtained from observation of the part with the glaze layer formed thereon is not less than 80.

<5> The sanitary ware recited in any one of <1> to <4> may be further characterized in that the L value obtained from observation of the part with the glaze layer substantially unformed thereon is not less than 80.

<6> The sanitary ware recited in any one of <1> to <5> may be further characterized in that the base has a water-absorption ratio of from 8% to 30%, and the base includes a component that increases whiteness as compared with before the component is added.

<7> The sanitary ware recited in <6> may be further characterized in that the component includes at least one element which belongs to any one of groups 2 to 4 and groups 12 to 14 of a periodic table and also belongs to third to fifth periods of the periodic table.

<8> The sanitary ware recited in any one of <1> to <7> may further include an intermediate layer between the base and the glaze layer.

<9> The sanitary ware recited in <8> may be further characterized in that the intermediate layer is white, and the glaze layer is transparent.

In the sanitary ware according to the present invention, the absolute value of the difference ($\Delta$L) between the L value obtained from observation of the part with the glaze layer formed thereon and the L value obtained from observation of the part with the glaze layer substantially unformed thereon is not more than 12, or the color difference ($\Delta$E) between the color in observation of the part with the glaze layer formed thereon and the color in observation of the part with the glaze layer substantially unformed thereon is not more than 14. In this configuration, even though the thickness of the glaze layer varies so that the color of the base may be shown more or less through the glaze layer, there may be almost no difference in color seen from the glaze layer side. That is, according to this configuration, the sanitary ware adapted to suppress variability in color seen from the glaze layer side is provided.

In the sanitary ware in which the absolute value of the difference ($\Delta$L) is not more than eight or the color difference ($\Delta$E) is not more than eight, variability in color may be effectively suppressed.

In the sanitary ware in which the absolute value of the difference ($\Delta$L) is not more than six or the color difference ($\Delta$E) is not more than six, variability in color may be more effectively suppressed.

When the L value obtained from observation of the part with the glaze layer formed thereon is not less than 80, the sanitary ware may exhibit favorable white color.

When the L value obtained from observation of the part with the glaze layer substantially unformed thereon is not less than 80, variability in color may be effectively suppressed.

The base having a poor water-absorption ratio may grow in density and thereby may have more glass phase. As a result, coloring components may soak into the glass phase and easily taint the base with color, which may undermines whiteness of the base. On the other hand, when the base has a water-absorption ratio of from 8% to 30%, the base may have less glass phase with the result that the base may be less likely to be tainted with color. Furthermore, whiteness of the sanitary ware may be increased by the component (whitening component) that increases whiteness and thereby the sanitary ware may appear more beautiful.

When the whitening component includes at least one element which belongs to any one of groups 2 to 4 and groups 12 to 14 of the periodic table and also belongs to third to fifth periods of the periodic table, the sanitary ware may appear more white and beautiful.

When the sanitary ware includes the intermediate layer between the base and the glaze layer, variability in color may be suppressed by the intermediate layer in combination with the base and the glaze layer.

When the intermediate layer is white and the glaze layer is transparent, the white color of the intermediate layer may be shown through the glaze layer, whereby variability in color seen from the glaze layer side may be suppressed.

BRIEF DESCRIPTION OF DRAWINGS

The present invention is hereinafter described in further detail using non-limiting examples of a typical embodiment with reference to the accompanying drawings.

Fig. 1 is a cross-sectional view of a sanitary ware.
Fig. 2 is a cross-sectional view of the sanitary ware.

DETAILED DESCRIPTION

The present invention is hereinafter described in detail. In this specification, any values described as "... to ..." refer to a certain numerical range including upper and lower limits, unless specified otherwise. For example, "10 to 20" includes both of the lower limit of "10" and the upper limit of "20". Thus, "10 to 20" can be rephrased as "not less than 10 and not more than 20".

1. Sanitary Ware

In the present invention, the sanitary ware described herein refers to a ceramic utensil mostly used with plumbing equipment in, for example, bathrooms, washrooms, and lavatories.

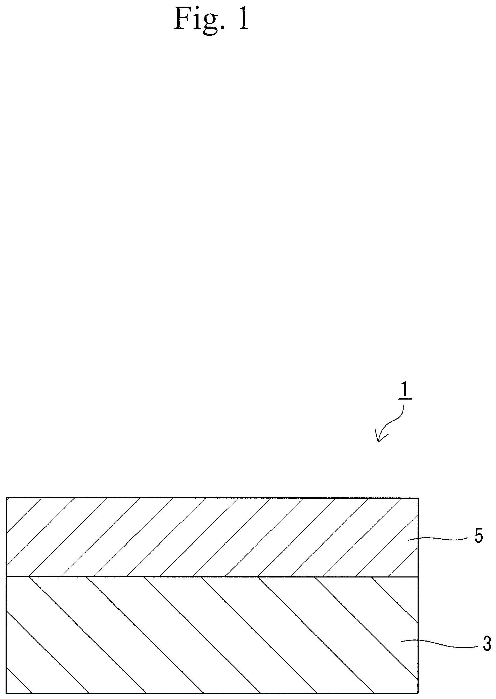

As illustrated in Fig. 1, a sanitary ware 1 according to the present invention includes a base 3, and a glaze layer 5 formed on an outer side than the base 3. The sanitary ware 1 is characterized in that, in color representation by the Lab color system (JIS Z8781-4), an absolute value of a difference ($\Delta$L) between an L value obtained from observation of a part with the glaze layer 5 formed thereon and an L value obtained from observation of a part with the glaze layer 5 substantially unformed thereon is not more than 12, or a color difference ($\Delta$E) between a color in observation of the part with the glaze layer 5 formed thereon and a color in observation of the part with the glaze layer 5 substantially unformed thereon is not more than 14. Preferably, the absolute value of the difference ($\Delta$L) is not more than eight, or the color difference ($\Delta$E) is not more than eight. More preferably, the absolute value of the difference ($\Delta$L) is not more than six, or the color difference ($\Delta$E) is not more than six. Preferably, the L value obtained from observation of the part with the glaze layer 5 formed thereon is not less than 80 (upper limit of the L value is normally 100). Preferably, the L value obtained from observation of the part with the glaze layer 5 substantially unformed thereon is not less than 80 (upper limit of the L value is normally 100).

Herein, a part with the glaze layer 5 substantially unformed thereon means a part where the base 3 is substantially exposed, that is, a part where the base 3 is exposed in 95% or more of the whole area of a given portion expressed as 100%. When the base 3 is not substantially exposed with coating or the like, the coating may be scraped off so as to expose the base 3.

In the sanitary ware 1 illustrated in Fig. 1, an absolute value of a difference ($\Delta$L) between an L value obtained from observation of the part with the glaze layer 5 formed thereon and an L value obtained from observation of the part with the glaze layer 5 substantially unformed thereon means an absolute value of a difference ($\Delta$L) between an L value observed from the glaze layer 5 side (L value observed from the upper side in Fig. 1) and an L value observed from the base 3 side (L value observed from the lower side in Fig. 1).

A color difference ($\Delta$E) between a color in observation of the part with the glaze layer 5 formed thereon and a color in observation of the part with the glaze layer 5 substantially unformed thereon means a color difference ($\Delta$E) between a color observed from the glaze layer 5 side (observed from the upper side in Fig. 1) and a color observed from the base 3 side (observed from the lower side in Fig. 1).

The values $\Delta$L and $\Delta$E are described below. In the L*a*b* color system, provided that R ($L_0$, $a_0$, $b_0$) is coordinates in color space of the color in observation of the part with the glaze layer 5 substantially unformed thereon, and M ($L_1$, $a_1$, $b_1$) is coordinates in color space of the color in observation of the part with the glaze layer 5 formed thereon, $\Delta$L, $\Delta$a, $\Delta$b, $\Delta$E are defined as follows. These values may be measured by a color machine (for example, Chroma Meter, CR-400, supplied by Konica Minolta, Inc.).

$$\Delta L = L_1 - L_0$$

$$\Delta a = a_1 - a_0$$

$$\Delta b = b_1 - b_0$$

$$\Delta E = ((\Delta L)^2 + (\Delta a)^2 + (\Delta b)^2)^{1/2}$$

In the sanitary ware 1 according to the present invention, even though the thickness of the glaze layer 5 varies, variability in color seen from the glaze layer 5 side may be suppressed when $\Delta$L or $\Delta$E fulfills the above requirements. As far as the inventors of this invention know, there has been no such a sanitary ware that fulfills the above requirements.

The present invention has been made under the circumstances described below. The sanitary ware 1 variable in color may be thereby degraded in appearance. The past research and development conducted to improve sanitary wares in appearance solely relied on the idea that better appearances were made possible by improving their outermost layers, i.e., the glaze layer 5. However, it is now evident that improvement of the glaze layer 5 alone fails to adequately reduce variability in color. The inventors, as a result of their keen studies and tests, have found that it is unanticipatedly necessary to control the color of the base 3 too, and that variability in color is effectively suppressed by defining a relationship in color between the base 3 and the glaze layer 5. The present invention has been accomplished based on the finding.

When the absolute value of the difference ($\Delta$L) between the L value obtained from observation of the part with the glaze layer 5 formed thereon and the L value obtained from observation of the part with the glaze layer 5 substantially unformed thereon becomes smaller, the base 3 and the glaze layer 5 become closer in color. When the base 3 and the glaze layer 5 become closer in color, there may be almost no difference in color seen from the glaze layer 5 side, even though the thickness of the glaze layer 5 varies so that the color of the base 3 is shown more or less through the glaze layer 5. Accordingly, the present invention may provide the sanitary ware 1 in which variability in color seen from the glaze layer 5 side is suppressed. The lower limit of $\Delta$L is 0.

The color difference ($\Delta$E) also may be described as well as the L values. When the color difference ($\Delta$E) between the color in observation of the part with the glaze layer 5 formed thereon and the color in observation of the part with the glaze layer 5 substantially unformed thereon becomes smaller, the base 3 and the glaze layer 5 become closer in color When the base 3 and the glaze layer 5 become closer in color, there may be almost no difference in color seen from the glaze layer 5 side, even though the thickness of the glaze layer 5 varies so that the color of the base 3 is shown more or less through the glaze layer 5. Accordingly, the present invention may provide the sanitary ware 1 in which variability in color seen from the glaze layer 5 side is suppressed. The lower limit of $\Delta$E is 0.

The composition of the base 3 is not particularly limited. A base slurry, for example, may be used to form the base 3. The base slurry may be prepared by adding a predetermined amount of water to a ceramic raw material containing feldspar, pottery stone, kaolin, and clay, and then pulverizing the water-added material using a ball mill.

The composition of a glaze used to form the glaze layer 5 is not particularly limited. A glaze slurry may be used to form the glaze layer 5. The glaze slurry may be prepared by adding a predetermined amount of water to a glaze raw material containing silica sand, feldspar, lime, clay, and zinc flower, and then pulverizing the water-added material using a ball mill.

The thickness of the glaze layer 5 is not particularly limited. In view of waterproofness and resistance against penetration, the glaze layer 5 may preferably have a thickness of from 0.2 mm to 1 mm, more preferably from 0.3 mm to 0.8 mm, still more preferably from 0.4 mm to 0.8 mm.

According to the present invention, the absolute value the difference ($\Delta$L) between the L value obtained from observation of the part with the glaze layer 5 formed thereon and the L value obtained from observation of the part with the glaze layer 5 substantially unformed thereon is not more than a predetermined value, or the color difference ($\Delta$E) between the color in observation of the part with the glaze layer 5 formed thereon and the color in observation of the part with the glaze layer 5 substantially unformed thereon is not more than a predetermined value. Therefore, the composition of a glaze used to form the glaze layer 5 may be decided, in accordance with the composition of the base 3, so that $\Delta$E or the absolute value of $\Delta$L stays within a predetermined range of values. Alternatively, the composition of the base 3 may be decided, in accordance with the composition of a glaze used to form the glaze layer 5, so that $\Delta$E or the absolute value of $\Delta$L stays within a predetermined range of values.

Though the composition of the base 3 and the composition of the composition a glaze used to form the glaze layer 5 are not particularly limited as long as $\Delta$E or the absolute value of $\Delta$L stays within a predetermined range of values, the following composition is given as an example of the combination of the composition of the base and the composition of the glaze.

<Composition of glaze>

$SiO_2$: 50 to 70 parts by weight
$Al_2O_3$: 3 to 15 parts by weight
CaO: 5 to 20 parts by weight
MgO: 0.1 to 10 parts by weight
$K_2O$: 0.1 to 10 parts by weight
$Na_2O$: 0.1 to 5 parts by weight
ZnO: 0.1 to 20 parts by weight
$ZrO_2$: 0.1 to 20 parts by weight

The material, $Al_2O_3$, may be replaced with mullite ($3Al_2O_3 \cdot 2SiO_2$). The material, $Al_2O_3$ may be replaced with a mixture of mullite and $Al_2O_3$.

<Composition of base>

$SiO_2$: 25 to 40 parts by weight
$Al_2O_3$: 35 to 70 parts by weight
$Fe_2O_3$: 0.1 to 3.0 parts by weight
CaO: 0.1 to 3.0 parts by weight
MgO: 0.1 to 3 parts by weight
$K_2O$: 0.1 to 5.0 parts by weight
$Na_2O$: 0.1 to 5.0 parts by weight
$TiO_2$: 0.1 to 5.0 parts by weight

The material, $Al_2O_3$, may be replaced with mullite ($3Al_2O_3 \cdot 2SiO_2$). The material, $Al_2O_3$ may be replaced with a mixture of mullite and $Al_2O_3$. $TiO_2$ is an optional component.

The water-absorption ratio of the base 3 is not particularly limited. The water-absorption ratio may be measured in the following manner. A test piece is dried for 24 hours at 100°C, and its weight (dry weight) is then measured. Thereafter, the test piece is immersed in water for 24 hours, and then its weight (water-absorbed weight) is measured. The water-absorption ratio is calculated by the following formula.

$$\text{Water-absorption ratio (\%)} = \{(\text{water-absorbed weight - dry weight})/\text{dry weight}\}$$

$$\times 100$$

The water-absorption ratio of the base 3, though not necessarily limited to particular percentages, may preferably be not more than 30%, more preferably not more than 20%, still more preferably not more than 15%.

According to JIS A 5207, the base 3 of the sanitary ware 1 must have such a quality that ink penetrability is not more than 3 mm. The base 3 has a water-absorption ratio of approximately 1% or less. The technical aspects of the present invention described herein may be applicable to not only bases 3 having a water-absorption ratio of 1% or less, as provided for in JIS A 5207, but also bases 3 having a water-absorption ratio of 30% or less.

When the base 3 has a water-absorption ratio of from 8% to 30%, the base 3 may have less glass phase with the result that the base may be less likely to be tainted with color. In this case, it may be preferable to add a component that increases whiteness. Whiteness of the sanitary ware may be increased by the component (whitening component) and thereby the sanitary ware may appear more beautiful.

The whitening component is not necessarily limited to particular materials. It is preferable that the whitening component includes at least one element which belongs to any one of groups 2 to 4 and groups 12 to 14 of the periodic table and also belongs to the third to fifth periods of the periodic table. The elements in groups 2 to 4 and groups 12 to 14 of the periodic table are poorly reactive and less likely to dissolve or break the base 3. Furthermore, the elements in these groups of the periodic table are colorless, so that appearance of the sanitary ware 1 can be improved. The elements in third to fifth periods of the periodic table are in solid state and poorly reactive, and furthermore, these elements are abundantly producible and therefore favorable in terms of cost.

Though the elements in any one of groups 2 to 4 and also in third to fifth periods are not particularly limited as long as they meet the requirements, the elements preferably may be one or more selected from the group consisting of Al, Si, Sc, Ti, Zn, Ga, Ge, Y, Zr, Cd, In, and Sn.

A suitable example of the whitening component may be a white pigment, and more specifically, may be one or more selected from the group consisting of $TiO_2$, $Al_2O_3$, $ZrO_2$, $ZnO$, $SiO_2$, $ZrO_2 \cdot SiO_2$, and $3Al_2O_3 \cdot 2SiO_2$.

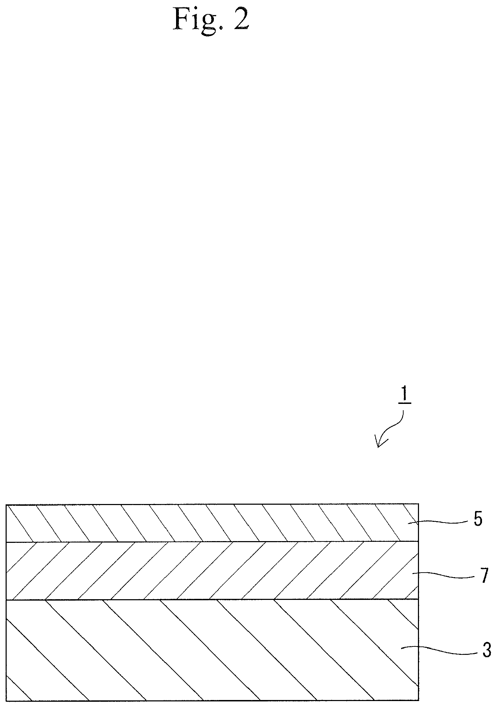

As illustrated in Fig. 2, the sanitary ware 1 having the base 3 and the glaze layer 5 may further include an intermediate layer 7 between the base 3 and the glaze layer 5. The intermediate layer 7 may reduce color difference (difference in whiteness) between the base 3 and the glaze layer 5 and thereby favorably suppress variability in color seen from the glaze layer 5 side.

The composition of the intermediate layer 7 is not particularly limited. The material used to form the intermediate layer 7 may be a mixture of the raw material of the glaze use to form the glaze layer 5 and the raw material of the base 3.

Preferably, the intermediate layer 7 may be white, and the glaze layer 5 may be transparent. In this case, the white color of the intermediate layer 7 may be shown through the glaze layer 5, whereby variability in color seen from the glaze layer 5 side may be suppressed. Furthermore, when the intermediate layer 7 is while, the whitening component added to the base 3 may be proportionately reduced. As a result, inexpensive components can be used to form the base 3, which is favorable in terms of cost.

2. Manufacturing method for sanitary ware

A manufacturing method for the sanitary ware 1, though not particularly limited, may be favorably configured as follows.

(1) Preparation of glaze slurry

A glaze slurry is prepared by adding a predetermined amount of water to a glaze raw material containing silica sand, feldspar, lime, clay, and zinc flower, and then pulverizing the water-added material using a ball mill.

(2) Production of base of sanitary ware

A base slurry is prepared by adding a predetermined amount of water to a ceramic raw material containing feldspar, pottery stone, kaolin, and clay by predetermined ratios, and then pulverizing the water-added material using a ball mill. The base slurry is casted in a plaster mold having a predetermined shape. The molded base is then dried at, for example, 40°C into a dry base.

(3) Glazing and firing

The glaze slurry is applied to the dry base by, for example, spraying. The resulting glazed base is then fired in a kiln at the temperature of, for example, 1200°C to 1300°C. This is how the sanitary ware 1 can be manufactured.

EXAMPLES

A further detailed description is given below using examples of the present invention.

1. Preparation of test pieces for evaluation

(1) Glaze

A glaze slurry was prepared by adding a predetermined amount of water to a glaze raw material containing silica sand, feldspar, lime, clay, and zinc flower, and then pulverizing the water-added material using a ball mill. Table 1 shows the glaze composition.

[Table 1]

| Glaze composition | Wt.% |
|---|---|
| $SiO_2$ | 63 |
| $Al_2O_3$ | 10 |
| CaO | 13 |
| MgO | 2 |
| $K_2O$ | 3 |
| $Na_2O$ | 1 |
| ZnO | 2 |
| $ZrO_2$ | 6 |

(2) Test pieces for evaluation

Each test piece was obtained as described below. A base slurry was prepared by adding a predetermined amount of water to a ceramic raw material containing feldspar, pottery stone, kaolin, and clay by predetermined ratios shown in Table 2, and then pulverizing the water-added material using a ball mill. The base slurry was casted in a plaster mold having a predetermined shape and molded, and then released from the mold, so that a molded base was obtained. The molded base was then dried at, for example, 40°C into a dry base. The glaze slurry was applied by spraying to one surface of the dry base. The glazed base was then fired in a kiln at 1220°C into a test piece for evaluation.

[Table 2]

| Base composition (wt.%) | Example 1 | Example 2 | Example 3 | Example 4 |
|---|---|---|---|---|
| $SiO_2$ | 49.7 | 55.9 | 57.5 | 64.1 |
| $Al_2O_3$ | 45.4 | 40.0 | 36.0 | 28.1 |
| $Fe_2O_3$ | 0.7 | 0.4 | 1.0 | 1.0 |
| CaO | 2.1 | 0.5 | 0.7 | 1.1 |
| MgO | 0.3 | 0.1 | 0.1 | 0.2 |
| $K_2O$ | 0.8 | 1.2 | 3.1 | 4.2 |
| $Na_2O$ | 0.1 | 1.4 | 1.4 | 1.2 |
| $TiO_2$ | 0.7 | 0.6 | 0.3 | 0.1 |
| | | | | |
| Water-absorption ratio (%) | 13.0 | 8.0 | 0.5 | 0.5 |
| L value obtained from observation of a part with a glaze layer formed thereon | 91.14 | 88.75 | 88.62 | 90.00 |
| L value obtained from observation of a part with a glaze layer substantially unformed thereon | 95.33 | 93.98 | 77.36 | 75.04 |
| Standard deviation of L value obtained from observation of a part with a glaze layer formed thereon | 0.08 | 0.28 | 0.51 | 0.70 |

(continued)

| | | | | |
|---|---|---|---|---|
| Water-absorption ratio (%) | 13.0 | 8.0 | 0.5 | 0.5 |
| Absolute value of $\Delta L$ | 4.20 | 5.23 | 11.25 | 14.96 |
| $\Delta E$ | 7.68 | 7.46 | 13.59 | 17.11 |

In each of the test pieces for evaluation were obtained a water-absorption ratio, "L", "a", and "b" values obtained from observation of a part with the glaze layer formed thereon, and "L", "a", and "b" values obtained from observation of a part with the glaze layer substantially unformed thereon. The water-absorption ratio was measured by the method described earlier.

As the L value obtained from observation of the part with the glaze layer formed thereon, an average of L values measured at 10 points on the glazed front surface of each test piece was used. As the L value obtained from observation of the part with the glaze layer substantially unformed thereon, an average of L values measured at 10 points on the unglazed back surface of each test piece was used. A standard deviation of the L value obtained from observation of the part with the glaze layer formed thereon was calculated from the L values measured at 10 points on the glazed front surface. The standard deviation indicates variability of the measured values. The absolute value of $\Delta L$ is an absolute value of a value calculated by subtracting the L value obtained from observation of the part with the glaze layer substantially unformed thereon (average of the L values measured at 10 points) from the L value obtained from observation of the part with the glaze layer formed thereon (average of the L values measured at 10 points).

The value of $\Delta E$ was calculated from $\Delta L$, $\Delta a$, and $\Delta b$ in the before-mentioned formulas. The value of $\Delta L$ is calculated by subtracting the "L" value obtained from observation of the part with the glaze layer substantially unformed thereon (average of the L values measured at 10 points) from the "L" value obtained from observation of the part with the glaze layer formed thereon (average of the L values measured at 10 points). The value of $\Delta a$ is calculated by subtracting the "a" value obtained from observation of the part with the glaze layer substantially unformed thereon (average of the "a" values measured at 10 points) from the "a" value obtained from observation of the part with the glaze layer formed thereon (average of the "a" values measured at 10 points). The value of $\Delta b$ is calculated by subtracting the "b" value obtained from observation of the part with the glaze layer substantially unformed thereon (average of the "b" values measured at 10 points) from the "b" value obtained from observation of the part with the glaze layer formed thereon (average of the "b" values measured at 10 points).

2. Evaluation result

In the examples 1 to 3, the absolute value of $\Delta L$ is not more than 12, and the value of $\Delta E$ is not more than 14. In all of the examples 1 to 3, the standard deviation of the L value obtained from observation of the part with the glaze layer formed thereon was smaller than in a comparative example 1. This result teaches that, even though the thickness of the glaze layer varies, variability in color seen from the glaze layer side is suppressed when the requirement that the absolute value of $\Delta L$ is 12 or less or the value of $\Delta E$ being 14 or less is met. When the standard deviation of the L value obtained from observation of the part with the glaze layer formed thereon is not more than 0.60, variability in color is hardly perceivable by the human eye.

As is indicated by the results of the examples 1 and 2, variability in color was markedly suppressed when the absolute value of $\Delta L$ is not more than eight, or the value of $\Delta E$ is not more than eight. That is, the standard deviation of the L value obtained from observation of the part with the glaze layer formed thereon was very small.

When the L value obtained from observation of the part with the glaze layer substantially unformed thereon is not less than 80, variability in color was effectively suppressed, as is indicated by the results of the examples 1 and 2. That is, the standard deviation of the L value obtained from observation of the part with the glaze layer formed thereon was very small.

The results of the examples 1 and 2 also indicate that variability in color was effectively suppressed when the base has a water-absorption ratio of from 8% to 20% and includes $TiO_2$. That is, the standard deviation of the L value obtained from observation of the part with the glaze layer formed thereon was very small.

Further, in the test pieces of the examples 1 and 2, whiteness was improved and the test pieces were beautiful in appearance, exhibiting a sense of high quality.

In the examples 1 to 3, the L value obtained from observation of the part with the glaze layer formed thereon was not less than 80 and the test pieces of these examples exhibited favorably white color.

3. Effects of the Examples

The examples of the present invention confirmed that variability in color seen from the glaze layer side in the sanitary ware is adequately suppressed even though the thickness of the glaze layer varies.

The present invention should not be limited to the embodiment described above, and may be variously modified or replaced within the scope of technical aspects defined in the appended claims.

INDUSTRIAL APPLICABILITY

The sanitary ware according to the present invention is not particularly limited in size or shape, and may be suitably changed in size and/or shape depending on intended use of this ware. The sanitary ware having a three-dimensional shape with a curved surface may be exemplified. The sanitary ware according to the present invention may be suitably for use in, for example, closet bowls, water-saving closet bowls, urinals, washing tanks, washbowls, basins, and slop sinks. Among these examples, the present invention may be particularly useful for washbowls since it may be used near users' eyes and variability in color seen from a glazed surface may be more easily caught by the eye, if any. Furthermore, the present invention may be particularly useful for washbowls having large depths, for example, depths of 500 mm or more (normally, 1,000 mm or less) since such washbowls may have different glaze thickness in the bottom surface and side surface thereof so that the washbowls may be easily affected by the color of the base.

**Claims**

1.  A sanitary ware (1), comprising:

    a base (3); and
    a glaze layer (5) formed on an outer side than the base (3),

    **characterized in that**:

    in color representation by Lab color system,
    an absolute value of a difference ($\Delta L$) between an L value obtained from observation of a part with the glaze layer (5) formed thereon and an L value obtained from observation of a part with the glaze layer (5) substantially unformed thereon is not more than 12, or
    a color difference ($\Delta E$) between a color in observation of the part with the glaze layer (5) formed thereon and a color in observation of the part with the glaze layer (5) substantially unformed thereon is not more than 14.

2.  The sanitary ware (1) according to claim 1, wherein
    the absolute value of the difference ($\Delta L$) is not more than eight, or
    the color difference ($\Delta E$) is not more than eight.

3.  The sanitary ware (1) according to claim 1 or 2, wherein
    the absolute value of the difference ($\Delta L$) is not more than six, or
    the color difference ($\Delta E$) is not more than six.

4.  The sanitary ware (1) according to any one of claims 1 to 3, wherein the L value obtained from observation of the part with the glaze layer (5) formed thereon is not less than 80.

5.  The sanitary ware (1) according to any one of claims 1 to 4, wherein the L value obtained from observation of the part with the glaze layer (5) substantially unformed thereon is not less than 80.

6.  The sanitary ware (1) according to any one of claims 1 to 5, wherein
    the base (3) has a water-absorption ratio of from 8% to 30%, and
    the base (3) includes a component that increases whiteness as compared with before the component is added.

7.  The sanitary ware (1) according to claim 6, wherein
    the component includes at least one element which belongs to any one of groups 2 to 4 and groups 12 to 14 of a periodic table and also belongs to third to fifth periods of the periodic table.

8. The sanitary ware (1) according to any one of claims 1 to 7, further comprising an intermediate layer (7) between the base (3) and the glaze layer (5).

9. The sanitary ware (1) according to claim 8, wherein
the intermediate layer (7) is white, and
the glaze layer (5) is transparent.

# Fig. 1

Fig. 2

Europäisches
Patentamt

European
Patent Office

Office européen
des brevets

# EUROPEAN SEARCH REPORT

Application Number

EP 18 19 2623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 167292 A (TOTO LTD) 11 June 2002 (2002-06-11) * abstract * * figures * * tables * ----- | 1-9 | INV. C04B41/86 C04B41/89 C04B41/00 C04B41/50 C04B41/52 |
| A | MILEVSKAYA R N ET AL: "PREPARING A GLAZE COATING BY APPLYING A TRANSPARENT COLORLESS BORON-CONTAINING GLAZE TO A CERAMIC AND FIRING", CHEMICAL ABSTRACTS, CHEMICAL ABSTRACTS SERVICE (C A S), US, vol. 108, no. 4, 1 January 1988 (1988-01-01), page 280, XP000017210, ISSN: 0009-2258 * abstract * ----- | 1-9 | |

TECHNICAL FIELDS
SEARCHED     (IPC)

C04B

The present search report has been drawn up for all claims

| Place of search | Date of completion of the search | Examiner |
|---|---|---|
| Munich | 13 February 2019 | Rosenberger, Jürgen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

13

**EP 3 459 924 A1**

## ANNEX TO THE EUROPEAN SEARCH REPORT
## ON EUROPEAN PATENT APPLICATION NO.

EP 18 19 2623

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2019

| Patent document cited in search report | Publication date | Patent family member(s) | Publication date |
|---|---|---|---|
| JP 2002167292 A | 11-06-2002 | NONE | |

For more details about this annex : see Official Journal of the European Patent Office, No. 12/82

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001072460 A